# EUROPEAN PATENT APPLICATION

(11) **EP 4 636 842 A1**
(43) Date of publication of application: **22.10.2025**
(21) Application number: 23903928.2
(22) Date of filing: 11.12.2023
(51) Int. Cl.: H01M 4/133, H01M 4/62, H01M 4/1393, H01M 10/052, H01M 4/02

(54) **ANODE MATERIAL FOR LITHIUM SECONDARY CELL, PRECURSOR FOR SAME, LITHIUM SECONDARY CELL, AND MANUFACTURING METHOD OF ANODE MATERIAL**

(30) Priority: 16.12.2022 KR 20220177544
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: LEE, Gang-Ho, Pohang-si, Gyeongsangbuk-do 37671 (KR); PARK, Sei-Min, Pohang-si, Gyeongsangbuk-do 37655 (KR); KIM, Yong-Jung, Pohang-si, Gyeongsangbuk-do 37673 (KR); KIM, Jang-Yul, Pohang-si, Gyeongsangbuk-do 37673 (KR)
(74) Representative: Pfenning, Meinig & Partner mbB
(86) International application number: PCT/KR2023/020333
(87) International publication number: WO 2024/128725

(57) **Abstract**

The present invention relates to an anode material for a lithium secondary cell, a precursor for the anode material, a lithium secondary cell, and a manufacturing method of the anode material. A precursor for the anode material according to an aspect of the present invention is an anode material precursor containing graphite, wherein the graphite may have peaks in particle size ranges of 2-8 µm and 10-25 µm, respectively, and a particle size distribution with a D50 of 6-23 µm.

## Description

### Technical Field

The present disclosure relates to an anode material for a lithium secondary cell, a precursor for an anode material, a lithium secondary cell, and a method of manufacturing an anode material.

### Background Art

Lithium secondary cells, especially lithium ion secondary batteries, often use carbon-based materials including graphite as anode active materials.

Since carbon-based active materials have a low discharge voltage of -0.2 V compared to that of lithium, they offer many advantages in terms of the energy density of secondary batteries. Nevertheless, as the fields with the demand for high-capacity lithium secondary cells, such as electric vehicles and the like, increase, the demand for improved performance of secondary batteries is increasing day by day.

In particular, improving high-temperature performance, such as high-temperature storage characteristics and high-temperature cycle characteristics, in lithium secondary cells for rapid charging is an important task to be solved.

### Disclosure of Invention

### Technical Problem

An aspect of the present disclosure is to provide an anode material having excellent high-temperature storage characteristics and high-temperature cycle characteristics and a precursor therefor.

Another aspect of the present disclosure is to provide a method for manufacturing the anode material and the precursor.

The subject matter of the present disclosure is not limited to the matters described above. Those skilled in the art to which the present disclosure pertains will have no difficulty in understanding additional subjects of the present disclosure from the overall contents of this specification.

### Solution to Problem

According to an aspect of the present disclosure, an anode material precursor includes graphite, wherein the graphite may have a peak in a particle size range of 2 to 8 µm and a particle size range of 10 to 25 µm, respectively, and may have a particle size distribution with a D50 of 6 to 23 µm.

According to another aspect of the present disclosure, an anode material may be characterized in the anode material precursor according to an aspect of the present disclosure is bound by a binder.

According to another aspect of the present disclosure, a lithium secondary cell includes an anode including a current collector and an anode material coated on a surface of the current collector; an electrolyte; and a cathode, wherein the anode material may be the anode material according to an aspect of the present disclosure.

According to another aspect of the present disclosure, a method of manufacturing an anode material includes an operation of preparing the anode material precursor according to an aspect of the present disclosure; an operation of coating a binder on the anode material precursor; and an operation of heat-treating the anode material precursor coated with the binder.

### Advantageous Effects of Invention

According to an embodiment of the present disclosure, by limiting the particle size distribution of graphite constituting the anode material, an anode material having a high packing density may be provided, and as a result, a lithium secondary cell including the same may have excellent high-temperature performance.

### Brief Description of Drawings

FIG. 1 is a schematic diagram illustrating a graph illustrating the particle size distribution of an anode material precursor provided according to an embodiment of the present disclosure, and
FIG. 2 is a schematic diagram illustrating a form in which an anode material precursor powder provided according to an embodiment of the present disclosure is applied to a current collector.

### Best Mode for the Invention

The embodiments of the present disclosure are not limited to the embodiments disclosed below. For example, those skilled in the art who understand the idea of the present disclosure will be able to easily suggest other embodiments included within the scope of the idea of the present disclosure through addition, modification, deletion of components, or the like, but this will also be considered to be included within the scope of the idea of the present disclosure.

In addition, throughout the specification, the term "including" a certain component does not exclude other components unless otherwise specifically stated, but rather means that other components may be included. In addition, the distinction between "above and below (top and bottom)," "forward and backward (front and back)," or "left and right (left and right)" in this specification does not mean an absolute physical positional relationship, and it should be noted that even if it is above, it may be implemented as a shape that exists below, unless it is contrary to a natural phenomenon or clearly impossible to implement.

In addition, it should be noted that, unless otherwise specified in the present disclosure, the mixing ratio or composition is based on weight.

In addition, each implementation example described below is only one example of implementing the technical idea of the present disclosure, and the scope of rights of the present disclosure is not limited to each implementation example.

Hereinafter, the present disclosure will be described in detail.

If the total pore volume inside is large after applying the anode active material to the current collector and rolling the same, the high-temperature performance of the anode is likely to deteriorate. Therefore, when the structural change of the electrode and the change in the total pore volume inside are minimized during electrode rolling, the high-temperature characteristics of the lithium ion battery may be improved.

The inventors of the present disclosure have conducted in-depth research to improve this point and have found that if the particle size distribution of graphite is controlled, the packing density of the anode material may be significantly improved as compared to the related art, and as a result, high-temperature performance may be improved, leading to the present disclosure.

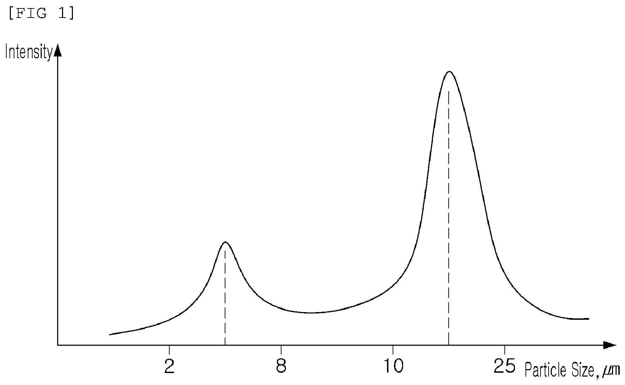

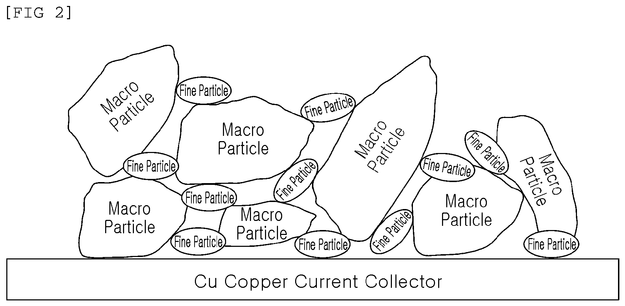

That is, according to an embodiment of the present disclosure, the anode material precursor includes graphite, and the particle size distribution of the graphite has a form as illustrated in FIG. 1. As can be seen in the drawings, the particle size distribution of graphite may have two peaks, one of which (fine particle peak) is formed in the particle size range of 2 to 8 µm, and the other (macro particle peak) may be formed in the particle size range of 10 to 25 µm. It is common for the particle size of powder to follow a normal distribution, and in the case of powder following such a normal distribution, it is known that particles with small particle size penetrate into the gaps between large particle size particles, thereby increasing the density of the powder. However, according to the research results of the inventors of the present disclosure, rather than cases like this, in case of being clearly divided into two peaks, not only may the density of the powder be further improved, but also the packing density of the anode material that ultimately forms the anode may be increased. Therefore, the present disclosure limits the particle size of the anode material precursor powder so that it has peaks in the fine particle region and the macro particle region, respectively. FIG. 2 illustrates the form in which the anode material precursor powder of the present disclosure is formed on the surface of the current collector. As can be seen in the drawing, the density may be improved by the presence of fine particles between the macro particles. In particular, since the gap between the macro particles and the size of the fine particles may be well-harmonized by having peaks in two particle size ranges, the density may be further improved.

At this time, as described above, the fine particle peak is formed in an area in which the particle size is 2 to 8 µm, and the macro particle peak may be formed in an area in which the particle size is 10 to 25 µm. By adjusting the particle size in this way, the density may be maximized. According to another embodiment of the present disclosure, the area in which the fine particle peak is formed may be in a range of 3 to 7 µm, and the area in which the macro particle peak is formed may be in a range of 12 to 22 µm.

In an embodiment of the present disclosure, the full width at half maximum(A) of the fine particle peak may have a value of 0.5 to 0.9 times (=A/B) compared to the full width at half maximum(B) (meaning the width when the intensity is half at the corresponding peak of the graph) of the macro particle peak. This means that the fine particle peak should be formed sharply compared to the macro particle peak, and if the full width at half maximum of the fine particle peak is further limited in this manner, the fine particle may effectively penetrate between the macro particle peaks to increase the density of the powder. In an embodiment of the present disclosure, if the fine particle peak and the macro particle peak have an overlapping form, the full width at half maximum of each peak may be calculated by extracting individual peaks using the Maximum Likelihood Deconvolution method.

In addition, in an embodiment of the present disclosure, the median value (D50) of the particle size of the entire anode material precursor graphite powder may have a value between 6 and 23 µm.

Although not necessarily limited thereto, the particle size distribution of the graphite may be obtained by mixing two or more graphite powders having different particle size distributions at an appropriate ratio.

In an embodiment of the present disclosure, the graphite may be natural graphite. As in an embodiment of the present disclosure, when the particle size is controlled so that two peaks appear, natural graphite may exhibit superior electrode processability and electrochemical properties compared to those of artificial graphite. In an embodiment of the present disclosure, the graphite may be flake graphite, amorphous graphite, or a combination thereof.

To obtain high density, it is advantageous for the graphite to be as spherical as possible. Therefore, in the case of graphite powder corresponding to a fine particle region with a particle size of 2 to 8 µm, the sphericity may be 95% or more, and in the case of graphite powder corresponding to a macro particle region with a particle size of 10 to 25 µm, the sphericity may be 85% or more. In addition, the sphericity of the entire graphite powder may be 90% or more. In the present disclosure, sphericity means the degree of proximity to a sphere, and the closer it is to 1, the closer the shape is to a sphere. In an embodiment of the present disclosure, sphericity may be obtained by dispersing sample powder in ethanol solvent using FlowCAM PV, then obtaining an optical image through a flow cell and an objective lens, and analyzing the shape using a dedicated algorithm.

In addition, according to an embodiment of the present disclosure, the intensity of the macro particle peak may be 2 to 5 times that of the fine particle peak. When the intensity of the macro particle peak is 2 to 5 times that of the fine particle peak, the strength of the anode material of the electrode to adhere to the electrode may be increased. The intensity of each peak means the frequency of the powder corresponding to the particle size of the corresponding peak, and may be determined by the count measured by a particle size measuring device. Although not necessarily limited thereto, one example of a particle size measuring device may be a Cilas-1090 particle size analyzer.

In an embodiment of the present disclosure, the anode material may be a precursor of the anode material bound by a binder. The binder is obtained by coating a precursor with a binder material and then carbonizing the same, and through this process, the anode material may be bound to particles to each other and/or to the current collector with sufficient strength.

The binder material may be obtained by carbonizing hard carbon, a soft carbon, or a combination thereof. The hard carbon-based binder may be one or two or more selected from the group consisting of sucrose, phenol resin, furan resin, furfuryl alcohol, polyacrylonitrile, polyimide, epoxy resin, cellulose, and styrene. In addition, the soft carbon may be a tar or pitch composition derived from coal or petroleum.

One method for manufacturing the above-described anode material is as follows. However, the manufacturing method below is only an illustrative method for manufacturing the precursor or anode material of the present disclosure, and does not necessarily mean that the precursor or anode material of the present disclosure should be manufactured by the manufacturing method below.

First, an operation of preparing a precursor provided by an embodiment of the present disclosure may be performed.

Thereafter, an operation of mixing the obtained precursor with a binder material may be performed. To mix the precursor and the binder material, a method of applying shear force by high- speed rotation after adding each material may be used, and as a result, a material in the form of the binder material being coated on the graphite particles forming the precursor may be obtained. At this time, the binder material may be added at a ratio of 8 to 15% relative to the weight of natural graphite.

An operation of performing heat treatment on the precursor coated with the binder material is performed. The binder material may be carbonized by the heat treatment to become a carbon-based material. In an embodiment of the present disclosure, the carbonization yield of the binder material after heat treatment may be in the range of 30 to 70%.

The heat treatment may be performed at a temperature of about 800 to 1300°C for 30 to 120 minutes. If the temperature is low or the time is short, a sufficient carbonization effect cannot be obtained, and if the temperature is too high or the time is long, the device may be overloaded or it may not be economically advantageous.

An anode material including graphite and a binder (carbon-based material) may be obtained by the above-described process.

According to an embodiment of the present disclosure, a secondary battery including the above-described anode material may be provided. The secondary battery according to an embodiment of the present disclosure is provided as a lithium secondary cell, and may include an anode including the above-described anode material, a cathode, and an electrolyte. In an embodiment of the present disclosure, a separator between the cathode and the anode may be further included.

In an embodiment of the present disclosure, the anode may be manufactured by applying a slurry containing an anode material (anode active material) manufactured according to an embodiment of the present disclosure to a current collector and drying the same.

The slurry may be obtained by mixing the anode material, a binder material, and a solvent.

Anything used in a lithium secondary cell may be used as the electrolyte, and the type thereof is not limited.

Distilled water may be used as the solvent.

The slurry may further include a conductive agent as needed. The conductive agent is not particularly limited as long as it does not cause a chemical change in the battery and has conductivity, and in detail, graphite such as natural graphite, artificial graphite or the like; carbon black such as acetylene black, Ketjen black, channel black, furnace black, lamp black, thermal black, or the like; conductive fibers such as carbon fibers, metal fibers or the like; metal powder such as fluorocarbon, aluminum, nickel powder or the like; conductive whiskers such as zinc oxide, potassium titanate, or the like; conductive metal oxide such as titanium oxide or the like; a conductive material such as polyphenylene derivatives or the like may be used. The conductive material may be mixed in a ratio of 0.1 wt% to 30 wt% with respect to the total weight of the composition (for example, slurry) for forming the anode active material layer.

In addition, the current collector to which the slurry containing the anode material is applied may be any material used in the technical field of lithium secondary cells, and the type thereof is not limited, but some examples thereof may be copper foil, nickel foil, stainless steel, titanium foil, nickel foam, copper foam, a polymer substrate coated with a conductive metal, or combinations thereof.

### Mode for the Invention

### (Example)

Hereinafter, the present disclosure will be described in more detail through examples. However, it should be noted that the following examples are only intended to illustrate and concretize the present disclosure, and are not intended to limit the scope of the rights of the present disclosure. This is because the scope of the rights of the present disclosure is determined by the matters described in the patent claims and matters reasonably inferred therefrom.

### Preparation of Anode Material Precursor and Anode Material

Natural graphite powder having the particle size distribution described in Table 1 below was prepared as an anode material precursor. In Table 1 below, the intensity ratio means the intensity ratio of the macro particle peak to the intensity of the fine particle peak, and indicates how many times the intensity of the macro particle peak is greater than the intensity of the fine particle peak. In all examples, the sphericity of the powder in the particle size range of 2 to 8 µm was 97% or more, and the sphericity of the powder in the particle size range of 10 to 25 µm was confirmed to be 85% or more. In addition, it was confirmed that the sphericity of the entire powder was 86% or more. In addition, the full width at half maximum of the fine particle peak compared to the full width at half maximum of the macro particle peak was 0.5 to 0.9 times for all examples.

**[Table 1]**

| Classification | D50 (µm) of Entire powder | Fine Particles | | Macro Particles | | fine particle peak full width at half maximum (A) /macro particle peak full width at half maximum (B) | Intensity Ratio |
|---|---|---|---|---|---|---|---|
| | | Shape | Peak Position (µm) | Shape | Peak Position (µm) | | |
| Invention Example 1 | 8 | Flake | 3 | Flake | 10 | 0.53 | 2 |
| Invention Example 2 | 23 | Flake | 8 | Flake | 25 | 0.61 | 4.76 |
| Comparative Example 1 | 10 | Flake | 9 | Flake | 13 | 0.93 | 1.56 |
| Comparative Example 2 | 24 | Flake | 2 | Flake | 27 | 0.48 | 1.43 |
| Invention Example 3 | 19 | Flake | 4 | Flake | 22 | 0.77 | 2.56 |
| Invention Example 4 | 14 | amorphous | 5 | Flake | 16 | 0.86 | 3.57 |
| Invention Example 5 | 13 | Flake | 4 | amorphous | 18 | 0.89 | 2.04 |
| Prior Art Example | 15 | - | - | Flake | 15 | NA | - |

In the anode material precursor obtained under the conditions described in Table 1 above, as a binder material, coal tar-derived pitch (residual carbon content of 40% or more) having a softening point of 110°C and phenol resin were mixed in a weight ratio of 6:4 to obtain a mixture, and the mixture was mixed in a ratio of 3 parts by weight with respect to 100 parts by weight of the total precursor, and shear force was applied by high-speed rotation to coat the particles. The coated particles were carbonized by heat treatment at a temperature of 1100°C for 30 minutes to obtain an anode material. In all the examples above, the weight of the binder material was adjusted to fall within the range of 8 to 15% with respect to the weight of natural graphite. In addition, it was confirmed that the carbonization yield of the binder material also satisfied 30 to 70% in all the examples.

### Manufacturing of Anode and Half Cell

97 wt% of anode material obtained by the above-described process was mixed with 2 wt% of binder including carboxymethyl cellulose and styrene butadiene rubber and 1 wt% of super P conductive agent in a distilled water solvent to prepare an anode active material slurry. The slurry was applied to a copper current collector, dried at 100°C for 10 minutes, and then pressed in a roll press. After that, the anode was manufactured by vacuum drying in a vacuum oven maintained at 100°C for 12 hours. The electrode density of the manufactured anode ranged from 1.35 to 1.82g/cc for each example (see Table 2).

In addition to the anode manufactured by the above method, a half cell of 2032 coin cell-type was manufactured using lithium metal as a counter electrode and LiPF6 dissolved in a solvent containing ethylene carbonate and dimethyl carmonate mixed in a volume ratio of 1:1 as an electrolyte.

The initial efficiency (%), capacity (mAh/g) and capacity retention after 50 full cycles of the fabricated half-cells were measured and the results are illustrated in Table 2.

**[Table 2]**

| Classific ation | Electrode Density (g/cc) | Initial Efficiency (%) | Capacity (mAh/g) | Capacity Retention (%) |
|---|---|---|---|---|
| Invention Example 1 | 1.82 | 95 | 359 | 95 |
| Invention Example 2 | 1.74 | 96 | 362 | 93 |
| Comparative Example 1 | 1.48 | 87 | 348 | 76 |
| Comparative Example 2 | 1.41 | 88 | 352 | 79 |
| Invention Example 3 | 1.69 | 93 | 361 | 94 |
| Invention Example 4 | 1.52 | 93 | 358 | 92 |
| Invention Example 5 | 1.67 | 92 | 353 | 90 |
| Prior Art Example | 1.58 | 91 | 359 | 90 |

As can be seen in Table 2 above, when an anode was manufactured using an anode material that satisfies the conditions provided by an embodiment of the present disclosure and used in a secondary battery, it not only showed an equivalent level of capacity compared to the prior art example that used natural graphite as an anode, which was mainly used in the related art, but also showed an equivalent or higher capacity retention compared to that of the prior art example.

Therefore, the excellent effect of the present disclosure could be confirmed.

## Claims

1. An anode material precursor comprising graphite,
wherein the graphite has a peak in a particle size range of 2 to 8 µm and a particle size range of 10 to 25 µm, respectively, and has a particle size distribution with a D50 of 6 to 23 µm.

2. The anode material precursor of claim 1, wherein an intensity of a peak existing in the particle size range of 10 to 25 µm in the particle size distribution is 2 to 5 times an intensity of a peak existing in the particle size range of 2 to 8 µm.

3. The anode material precursor of claim 1, wherein a full width at half maximum (A) of a peak existing in the particle size range of 2 to 8 µm is 0.5 to 0.9 times a full width at half maximum (B) of a peak existing in the particle size range of 10 to 25 µm.

4. The anode material precursor of claim 1, wherein a sphericity of the graphite having a particle size of 2 to 8 µm is 95% or more, and a sphericity of the graphite having a particle size of 10 to 25 µm is 85% or more.

5. The anode material precursor of claim 4, wherein a sphericity of entirety of the graphite is 90% or more.

6. The anode material precursor of claim 1, wherein the graphite is natural graphite.

7. The anode material precursor of claim 6, wherein the natural graphite is flake graphite, amorphous graphite, or a combination thereof.

8. An anode material **characterized in that** the anode material precursor according to any one of claims 1 to 7 is bound by a binder.

9. The anode material of claim 8, wherein the binder is formed by carbonizing hard carbon, soft carbon, or a combination thereof.

10. The anode material of claim 9, wherein a material of the binder is added in a ratio of 8 to 15% relative to a weight of natural graphite, and the material of the binder has a carbonization yield in a range of 30 to 70%.

11. The anode material of claim 9, wherein the hard carbon is one or two or more selected from the group consisting of sucrose, phenol resin, furan resin, furfuryl alcohol, polyacrylonitrile, polyimide, epoxy resin, cellulose, and styrene.

12. The anode material of claim 9, wherein the soft carbon is a tar or pitch composition derived from coal or petroleum.

13. A lithium secondary cell comprising:
an anode including a current collector and an anode material coated on a surface of the current collector;
an electrolyte; and
a cathode,
wherein the anode material is the anode material according to claim 8.

14. A method of manufacturing an anode material, comprising:
an operation of preparing the anode material precursor according to any one of claims 1 to 7;
an operation of coating a binder material on the anode material precursor; and
an operation of heat-treating the anode material precursor coated with the binder.

15. The method of manufacturing an anode material of claim 14, wherein the binder material is added at a ratio of 8 to 15% of a weight of natural graphite, and a carbonization yield of the binder material after the heat-treating is within a range of 30 to 70%.
